(19) Europäisches Patentamt
European Patent Office
Office européen des brevets

(11) **EP 4 446 508 A1**

(12) **EUROPEAN PATENT APPLICATION**

(43) Date of publication:
**16.10.2024 Bulletin 2024/42**

(21) Application number: **24170064.0**

(22) Date of filing: **12.04.2024**

(51) International Patent Classification (IPC):
*E04B 1/62* (2006.01)     *B32B 27/08* (2006.01)
*E04B 1/94* (2006.01)

(52) Cooperative Patent Classification (CPC):
**E04B 1/625; B32B 5/022; B32B 7/06; B32B 7/12;
B32B 27/08; B32B 27/10; B32B 27/12;
B32B 27/32; B32B 27/36; B32B 27/40; E04B 1/94**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.04.2023 GB 202305453**

(71) Applicant: **Obex Protection Limited
Worcester Worcestershire WR4 0SX (GB)**

(72) Inventors:
• **FRANCIS, Russ
Worcester, WR4 0SX (GB)**
• **DOOUSS, Callum
Worcester, WR4 0SX (GB)**

(74) Representative: **Mewburn Ellis LLP
Aurora Building
Counterslip
Bristol BS1 6BX (GB)**

(54) **A FIRE-RETARDANT FILM FOR A BUILDING CAVITY WALL**

(57)     A fire-retardant film is disclosed for arranging onto a cavity facing surface of an internal wall of a building cavity wall. The film comprises a polymeric material, and is configured to resist water and/or wind penetration, and is substantially water vapour permeable. Testing criteria are defined when the film is (i) attached to a cement board building component so that a planar surface of the film is substantially covered by the cement board building component, and (ii) the film is spaced apart from the cement board building component according to Standard Method BS EN 13238:2010 such that both opposed planar surfaces of the film are substantially exposed to air; and when the film and the cement board building component are conditioned according to Standard Method BS EN 13823:2020. Under such testing criteria, the film has a reaction to fire rating of B or above, a smoke generation rating of S3 or above, and a flaming droplets rating of d0, when the film is exposed to fire using Standard Test Method BS EN 11925-2:2020.

FIG 6

EP 4 446 508 A1

**Description**

FIELD OF THE INVENTION

The present invention relates to a fire-retardant film for a building cavity wall, and to a method of constructing a building cavity wall using the same.

BACKGROUND OF THE INVENTION

It is known to provide an airtight membrane (or wrap) to the external walls of a building to improve the building's thermal efficiency. Such membranes are configured to allow water vapour to permeate through the wall so that moisture can escape from the building, which thereby improves the air quality inside the building. Typically, these building membranes are applied to the outward facing surface of an internal wall of a building's cavity wall, which reduces the likelihood that the membrane will be damaged during the subsequent construction of the building's interior.

A known problem with such building membranes is that they are typically formed of polymeric materials (e.g., polypropylene) which do not meet the required fire classification standards. A known building membrane, which is purported to achieve the required standard, is only able to do so when the membrane is fully supported by a suitable rigid building board or block which is, itself, configured with fire retardant properties (e.g., a cementitious building block). Consequently, the fire-retardant properties of the membrane are primarily determined by the fire-retardant building component to which it is attached. Therefore, in situations where the membrane may become separated from the building component (e.g., due to delamination) then the membrane, on its own, would not exhibit the required fire retardation properties. In such situations, the presence of such membranes can lead to an increase in the risk of fire propagating through the cavity wall of the building.

The present invention aims to address the above problems with existing building membranes.

SUMMARY OF THE INVENTION

According to a first aspect, the present invention provides a fire-retardant film for arranging onto a cavity facing surface of an internal wall of a building cavity wall, wherein the film comprises a polymeric material, and is configured to resist water and/or wind penetration, and is substantially water vapour permeable;

wherein the film is characterised by satisfying a first criterion and/or a second criterion, and wherein testing for the first criterion requires that the film is attached to a cement board building component so that a planar surface of the film is substantially covered by the cement board building component, and wherein testing for the second criterion requires that the film is spaced apart from the cement board building component according to Standard Method BS EN 13238:2010 such that both opposed planar surfaces of the film are substantially exposed to air;

wherein the first and second criteria each require that the film and the cement board building component are conditioned according to Standard Method BS EN 13823:2020, and that the film has a reaction to fire classification of B or above, a smoke generation rating of S3 or above, and a flaming droplets rating of d0, when the film is exposed to fire using Standard Test Method BS EN ISO 11925-2:2020.

The film, according to the first aspect, is defined with reference to a reaction to fire test (e.g., according to Fire Classification Standard BS EN 13501-1) which provides an indication of the film's ability to prevent the spread and/or penetration of fire through a structure (e.g., the walls of a building). A reaction to fire rating of B or above signifies that that the film has only a very limited contribution to the fire propagation. A smoke generation rating of S3 or above, means that the film produces emissions with high volume intensity. A flaming droplets rating of d0 identifies that the film produces no burning droplets.

In use, the film may be arranged on an internal and/or external wall portion of a cavity wall of a building. As such, the film may be used to prevent penetration of wind and water from outside the building. Such an arrangement may be defined as a building wrap. When exposed to thermal attack, the film is capable of withstanding, and/or resisting, combustion which thereby reduces the spread of fire (e.g., through the wall, and/or within the wall cavity). The film's enhanced combustion resistance means that the emergency services are afforded more time to control the outbreak of a fire and can delay the spread of a fire to other adjoining parts of the building.

It will be appreciated that BS EN 13823:2020 is a European Standard Fire Classification which determines the reaction to fire tests of items, or elements, for use in the construction of a building. Furthermore, BS EN 13823:2020 specifies a single burn test (SBI) method for determining the reaction to fire performance of a substantially flat construction element when it is exposed to thermal attack from a single flame. BS EN 13238:2010 describes the conditioning procedures for test specimens which will be tested according to the European standards for reaction. BS EN ISO 11925-2 describes a standard method of testing the products by exposing them to a flame (e.g., direct impingement of a flame under zero impressed irradiance) using vertically oriented test specimens (i.e., a single flame ignitability test (SFI)).

According to the first and second criteria, at least one specimen of the film may be provided (e.g., a plurality of film specimens may be provided) and prepared in accordance with BS EN 13238:2010.

The at least one film specimen may be arranged (e.g., orientated/positioned) to define two vertical wing portions which form a right-angled corner. The film specimen is exposed to a flame from a burner which is placed at the bottom of the interior corner formed between the two vertical wing portions (i.e., so that the burner is positioned between the two wing portions). In this way, the test may be carried out to simulate a flame exposure that would be experienced by a material lining the walls of a room when a wastepaper basket ignites in a corner of the room. The flames are obtained by the combustion of a flammable gas (e.g., propane) which is injected through a sandbox positioned immediately adjacent to the burner.

According to the first criteria, the film specimen may be adhered to the cement board building component. According to the second criteria the film specimen may be spaced apart from the cement board building component by a distance of around 25 mm (e.g., 25 mm). According to each of the first and second criteria, the cement board building component may be a board having a thickness of around 12 mm.

During testing, the film specimen may be placed in a suitable environment such as a testing chamber. The chamber may be connected to a gas exhaust system capable of removing hot gases which are produced during the test. The exhaust system may be operable, throughout the test, with an exhaust volume flow rate of $0.6 \pm 0.05$ m$^3$s$^{-1}$.

The at least one specimen may be mounted vertically in a specimen holder. The holder may comprise a rectangular frame which is formed of a fire-resistant material. The film specimen can be configured with a rectangular shape to match the frame of the specimen holder. An upper end (i.e., an uppermost and substantially horizontal edge of the film specimen) may be attached to the holder. Two opposing and substantially vertical (e.g., lateral) sides of the film specimen may be attached to the sides of the specimen holder, and an exposed lower end (e.g., a lowermost and substantially horizontal edge) of the film specimen may be spaced apart, vertically, from the end of the holder (e.g., by a distance of 30 mm).

In an exemplary arrangement, the burner is angled at an angle of 45° to a substantially vertical join between the two vertical wing portions of the film specimen (e.g., a substantially vertical centre line of the film specimen). The testing apparatus may be configured so that the flame height is around 20 mm above the end of the burner (i.e., when measured in a vertical direction). The test specimen may be subjected to thermal attack from the burner over a continuous period of around 20 minutes. The burner is configured (e.g., by controlling the combustion of propane gas injected through a sandbox) to give a heat output of $30.7 \pm 2.0$ kW.

According to the first and second criteria, the film satisfies the following three ratings: (a) a reaction to fire rating, (b) a smoke generation rating, and (c) a flaming droplet rating. The ratings (a), (b), and (c) may be determined by measuring one or more parameters during the film testing procedure. The parameters may include at least one of a heat release rate (HRR), and a smoke production rate (SPR). From these measured parameters, a series of indices can be determined, including a fire growth rate index (FIGRA), a lateral flame spread (LFS), a total heat release (THR$_{600s}$), a smoke growth rate index (SMOGRA) and a total smoke production (TSP$_{600s}$).

The heat release (or production) rate can be measured by an oxygen calorimeter, which uses the principle that the amount of oxygen consumed in a fire is proportional to the amount of heat produced.

The smoke production rate can be measured by a light attenuation instrument mounted in the gas exhaust system, optionally alongside the sampling equipment used to measure heat production.

The FIGRA and SMOGRA indices are calculated as follows:

$$FIGRA = 1000 \cdot max\left(\frac{HRR_{av}(t)}{t}\right)$$

$$SMOGRA = 1000 \cdot max\left(\frac{SPR_{av}(t)}{t}\right)$$

where HRR$_{av}$ is the heat release rate (measured in kW) averaged over 30 s, SPR$_{av}$ is the smoke production rate (measured in m$^2$s$^{-1}$) averaged over 60 s, and t (measured in s) is the time elapsed following the start of the test (e.g., the ignition of the burner). The units of FIGRA and SMOGRA are Ws$^{-1}$ and m$^2$s$^{-2}$, respectively. It will be appreciated that different heat release related threshold values for the FIGRA calculation are used in different classes to obtain FIGRA$_{0,2MJ}$ and FIGRA$_{0,4MJ}$ values.

The THR$_{600s}$ and TSP$_{600s}$ values are calculated over the first 600 seconds of the test as follows:

$$THR_{600s} = \frac{1}{1000} \sum_{0s}^{600s} HRR(t).\Delta t$$

$$TSP_{600s} = \sum_{0s}^{600s} SPR(t).\Delta t$$

where HRR(t) is the heat release rate as a function of time, and SPR(t) is the smoke production rate as a function of time, and $\Delta t$ is the data acquisition interval (measured in s) of the measurement. The units of $THR_{600s}$ and $TSP_{600s}$ are MJ and $m^2$, respectively.

The reaction to fire rating of B is achieved if $FIGRA_{0.2MJ}$ value is up to 120 $Ws^{-1}$, if the $THR_{600s}$ value is up to 7.5 MJ, and if the lateral flame spread is observed to not reach the edge of the specimen. The smoke generation rating of S3 is achieved if the SMOGRA is more than 180 $m^2s^{-2}$ and the $TSP_{600s}$ is more than 200 $m^2$.

Visual observations are made of the film specimen during the test to identify flame spread and the subsequent falling of flaming droplets or particles. For example, filter paper may be placed beneath the specimen holder and replaced between tests. The filter paper is arranged to catch any flaming droplets from the vertical film specimen. If any flaming droplets are produced, these will cause ignition of the filter paper which can be recorded. The flaming droplets rating of d0 is achieved if no flaming droplets/particles are observed within 600 seconds of the film specimen being exposed to thermal attack from the flame.

The lateral flame spread rating may comprise a measure of whether the flame reaches the outer (i.e., lateral) edge of a wing of the film specimen at any height between 500 mm and 1000 mm.

Further optional features of the invention will now be set out. These may be applied to any aspect of the invention singly or in any combination unless the context demands otherwise.

The film specimen may be configured with a smoke generation rating of S2 (corresponding to a SMOGRA value of up to 180 $m^2s^{-2}$ and a $TSP_{600s}$ value of up to 200 $m^2$). In exemplary arrangements, the film specimen has a smoke generation rating of S1 (corresponding to a SMOGRA value of up to 30 $m^2s^{-2}$ and a $TSP_{600s}$ value of up to 50 $m^2$).

The film of the first aspect, may be further defined with reference to an ignitability test according to BS EN ISO 11925-2:2020. According to the ignitability test, the burner and flame may be configured so that a flame impinges (e.g., directly) on the film specimen (e.g., around the join between the two vertical wing portions of the film specimen), and at a position which is around 40 mm above the lower edge of the film specimen. The flame height may be set at 20 mm. The flame may be arranged to impinge on the specimen for 30 seconds. A marker may be placed on the film at a position which is around 150 mm above the end of the burner (e.g., 150 mm vertically above the burner end). During the test, the time taken for the flame tip to reach the marker is recorded (i.e., the flame spread (Fs)). Further observations can be made during the test, including whether ignition of the film occurs, whether flaming debris is produced, and if ignition of the filter paper occurs. A reaction to fire rating of E is determined if the flame does not reach the marker within 20 seconds from the start of the test (i.e., up to and including 20 s). A flaming droplets rating of d2 is achieved if no flaming droplets (or debris) is observed throughout the duration of the test.

The film may have a laminate construction (e.g., the film may comprise one or more lamina, or layers). The laminate construction may comprise at least one layer which is formed of the polymeric material (e.g., a synthetic organic material, or plastic).

A first layer of the laminate construction may be formed of a polyester material (e.g., a material comprising polymer units linked by ester groups). The polyester material may be non-woven (e.g., spunbonded). For example, the polyester material may be formed of a plurality of elements (e.g., fibres or filaments) which are bonded together (e.g., chemically, mechanically and/or thermally). The first layer may be configured to provide the film with its advantageous mechanical properties and/or vapour permeability.

The laminate construction may comprise a second layer which is formed of a thermoplastic material (e.g., comprising polyurethane). The second layer may be configured to provide the film with its advantageous resistance to fire and or water penetration.

An adhesive coating may be applied to at least one surface (e.g., a planar surface) of the film. The adhesive coating may be configured to enable the at least one surface to be attached (e.g., bonded) to a rigid building component of a wall. In use, the at least one surface may be attached to a vertical surface of the inner wall or outer wall of a building cavity wall. The adhesive coating provides a convenient means to attach the film to a wall of the building, and avoids the need to use separate attachment elements (e.g., tape, or fastenings). The adhesive coating may for example be provided on the film at an area density of at least 100 $g/m^2$, or at least 125 $g/m^2$, or about 150 $g/m^2$. This is considered to provide increased adhesion levels to typical substrates compared with known films marketed for a similar purpose.

In exemplary arrangements, the adhesive coating may be applied to a planar surface of the first layer of the film (e.g., so that the first layer is interposed between the second layer and the adhesive coating).

The adhesive coating may comprise an acrylic polymeric material. The adhesive coating may comprise one or more flame retardant compounds, which are configured to prevent the spread of fire at the interface between the film and a surface to which the film is attached.

Prior to use (e.g., when the film is being stored), the adhesive coating may be covered with a release layer (or tape) to protect the adhesive coating. The release layer can be removed from the adhesive coating before the film is installed on a rigid building component (e.g., a wall of a building). The release layer may be removed from the film immediately before it is installed onto the rigid building component.

The removable release layer may be configured (e.g., dimensioned) to cover at least a portion of the adhesive coating. The release layer may be formed of a material which comprises at least one of silicone and polypropylene. The release layer may have a laminate construction which comprises a first layer comprising a silicone material. The first layer may be coated in a layer of polypropylene, which defines a second layer of the laminate construction. In alternative exemplary arrangements, the release layer may comprise a silicone-coated paper.

The release layer may comprise a first release layer portion and a second release layer portion. The first release layer portion may be configured to cover a first section of the adhesive coating. The second release layer portion may be configured to cover a second section of the adhesive coating. The first section of the adhesive coating may be configured to cover up to half of the at least one surface of the film.

The first and second release layer portions may be removed independently from one another, to expose the respective portions of the adhesive coating. Consequently, the first release layer portion may be removed, initially, to allow the first portion of adhesive coated film to be mounted at a desired location on the building (e.g., attached to a rigid building component). Then, once the first adhesive portion is secured in position, the second release layer portion can be removed so that the second adhesive covered portion of the film can be mounted in position. By retaining the second release layer portion on the film whilst the first adhesive film portion is arranged in position, the installer is able to handle both surfaces of the second adhesive coated film portion (i.e., without becoming attached to the adhesive). This is particularly advantageous when the film is being installed at an elevated position on a building (e.g., the installer may be positioned on an elevated platform or scaffolding), and so is exposed to high winds and rain which can disrupt the films installation. The first and second release layers allow the installer to manoeuvre the film more conveniently into the correct position, in such windy conditions, without the film sticking to itself.

The film may be arranged as a roll for storage and/or transportation of the film. The film may be configured lengthways in the roll (e.g., the roll may be formed by rolling up the film along a longitudinal direction of the film). The first and second release layer portions may be divided along the longitudinal direction of the film. The longitudinal direction of the film may be substantially perpendicular to a principal axis of the roll. The longitudinal arrangement of the release layer portions means that each section of film (i.e., which may be unspooled and detached from the roll with a lateral cut) is provided with first and second release portions, which thereby enables each film section to be conveniently mounted in position.

At least a portion of the film may be configured on the roll so that the adhesive coating is concealed within the roll (i.e., the adhesive coating is arranged on an inner surface of the roll). Accordingly, as the film is unspooled the film's surface with the adhesive coating may be exposed, incrementally. In this way, the adhesive coating may be protected from damage, or debris build-up, whilst the film is not in use. In an alternative arrangement, the adhesive coating may be arranged on the outer surface of the roll. A first (e.g., exposed) portion of the outer surface of the film (e.g., which comprises the adhesive coating) can be attached directly to a rigid building component (e.g., a sheathing board defining at a portion of a wall of a building). Subsequent portions of film's surface can then be attached to the building component as the film is unrolled, incrementally.

According to an exemplary arrangement, the film is configured with a length (e.g., measured parallel to a longitudinal direction of the film) of at least 5 m, optionally at least 10 m and/or up to 50 m. The film may be configured with a width (e.g., measured perpendicular to the longitudinal direction of the film) of between 1 m and 2 m. In exemplary arrangements, the film width may be around 1.5 m.

The film may have a thickness (e.g., measured in a direction which is perpendicular to the length and width) of up to 0.5 mm. In exemplary arrangements, the film may have a thickness of up to 0.4 mm, and/or at least 0.3 mm.

The film may be characterised by satisfying a third criterion. The third criterion is satisfied when the film has a determined range of tensile strengths, when tested according to Standard Test Method BS EN 12311-1:2000. In exemplary arrangements in which the film is configured lengthways in a roll, the film may have a tensile strength of at least 230 N per 50 mm when measured in the lengthways direction of the roll (e.g., the direction in which the film is pulled when it is unrolled). Optionally, the lengthwise tensile strength of the film may be at least 235 N (or at least 240 N), per 50 mm, and/or up to 270 N, per 50 mm. The film may be configured with a tensile strength of at least 160 N, per 50 mm, when measured in a widthways direction of the roll (e.g., a transverse tensile strength). Optionally, the transverse tensile strength may be at least 170 N (or at least 180 N), per 50 mm, and/or up to 195 N, per 50 mm. Consequently, the film is strong enough to be unrolled and then arranged on an exposed surface of a building. Also, the film is resistant to damage during subsequent construction of the building.

In exemplary arrangements, testing of the film according to the third criterion may require that the film is conditioned, prior to the test, for a minimum of 20 hours at a temperature of 23 ± 2°C, and at a relative humidity in the range of 30 % to 70 %. A plurality of specimens may be provided, each having a width of 100 mm, and a length of at least 200 mm (e.g., so that the film specimen can be engaged between the jaws of the testing apparatus). Outer lateral sections of each film specimen (e.g., around 25 mm wide) may be folded inwards (i.e., towards a longitudinal centre line of the specimen) so that they meet in the middle of the specimen but do not overlap. The testing method may further comprise applying a pre-tension of 5 N. The test may be undertaken at a constant rate of extension of 100 mm per minute. An exemplary testing apparatus suitable for carrying out the test according to the sixth criterion includes the Testometric C.R.E. machine.

The film may be characterised by satisfying a fourth criterion, wherein the fourth criterion is satisfied when the film is configured with a longitudinal tear resistance of 100 N (e.g., when measured in a lengthways direction of the roll), and/or a transverse tear resistance 106 N (e.g., when measured in a widthways direction of the roll), when measured according to Standard Test Method BS EN 12310-1:2000.

The film may be characterised by satisfying a fifth criterion, wherein testing for the fifth criterion requires that the film has a water vapour permeability (Sd) of less than 0.12 m when tested according to Standard Test Method BS EN ISO 12572:2016. In exemplary arrangements, the water vapour permeability of the film may be less than 0.4m. Advantageously, the film as defined according to the fifth criteria is capable of allowing water vapour to escape through the walls, to thereby prevent excessive humidity in the building, which could otherwise lead to damp conditions that can cause the formation of mould.

The film may be characterised by satisfying a sixth criterion, testing for which requires that the film is configured with an air permeability of less than 0.05 $m^3m^{-2}h^{-1}$, when tested according to Standard Test Method BS EN 12114:2000 (modified according to BS EN 1026:2016). Advantageously, the film as defined according to the sixth criterion is capable of preventing air flow (e.g., drafts) through the walls of a building. The film thereby improves the thermal performance of the building. Testing of the film according to the sixth criterion may involve a rectangular film specimen having a width of 1.3 m and a length of 1.3 m which may be mounted to a rectangular frame to define an exposed (i.e., central) test area of 1.23 $m^2$. During the test, the film may be exposed to a relative pressure differential of up to 100 pa.

The film may be further characterised by satisfying a seventh criterion. Testing for the seventh criterion requires that the film is configured to resist water penetration for at least 2 hours, when tested according to Standard Method BS EN 1928:2000 (which relates to flexible films for waterproofing). Advantageously, the film 10 is therefore capable of reducing water leaks (e.g., due to rain) into the building.

In an exemplary arrangement, the testing of the film according to the seventh criterion may require that the film is conditioned prior to testing for at least 6 hours at a temperature of 23 ± 5°C. The testing procedure may involve providing at least one film specimen (e.g., a plurality of specimens). The at least one specimen may comprise a circular cut-out having a diameter of around 150 mm. The at least one specimen may be arranged onto a separate piece of filter paper (i.e., to indicate water passage through the film). A cover plate may be placed over the at least one film specimen to prevent material lifting. The at least one specimen is then subjected to a hydrostatic head of 200 mm for a period of 2 hours. After which, the at least one specimen may be inspected for any discolouration of the filter paper. The eighth criterion is satisfied if no discolouration of the filter paper is observed. The standard test may be undertaken in an atmosphere of 65 ± 5% relative humidity and at a temperature of 20 ± 2°C. The eighth criterion may require that, during the test, the film is subjected to a water pressure differential of at least 2 kPa.

According to at least one, or each, of the first to seventh criteria, the film may be configured to satisfy Standard BS EN 13859-2:2014, which specifies the characteristics (e.g., length, width, straightness, and mass per unit area) of flexible underlays which are arranged on (or within) a building (e.g., within a building cavity wall).

According to a second aspect, the invention provides a building system at least one rigid building component for a building cavity wall, and a fire-retardant film according to the first aspect.

The building cavity wall may comprise an inner wall and an outer wall which together define a cavity therebetween. The inner and outer walls may extend in a substantially vertical direction to define a height of the wall (or wall section). The inner and outer walls may extend in a transverse, or widthwise, direction to define a width of the wall. The inner and outer walls may be spaced apart in a depthwise direction (e.g., a transverse direction that is substantially perpendicular to the widthwise direction) in order to define a depth of the wall. It will be appreciated that the wall cavity may be formed by spacing apart the inner and outer walls in the depthwise direction (i.e., a transverse direction that is substantially perpendicular to the widthwise and vertical directions of the inner and outer walls).

The rigid building component may be configured to define at least part of an inner wall of the building cavity wall. The film may be arranged on a cavity facing surface of the inner wall (i.e., the cavity facing surface may define a surface of the inner wall which opposes the outer cavity wall). Alternatively, or in addition, a separate section of film may be arranged on a cavity facing surface of the outer wall.

The rigid building component may define a block or a board. The rigid building component may be a sheathing board which is comprised of at least one of a cementitious material, gypsum, calcium silicate and fibreglass. The rigid building component may be attachable to a framed section of the wall (e.g., the inner and/or outer wall). The framed wall section may be made of wood or metal (e.g., steel).

In exemplary arrangement in which the rigid building component is a sheathing board, it may be characterised by satisfying a first criterion (of the rigid building component) wherein testing for the first criterion requires that the sheathing board is conditioned according to Standard Method BS EN 13823:2020, and the sheathing board has a reaction to fire rating of A1 or above, when the sheathing board is exposed to fire using Standard Test Method BS EN 11925-2 (e.g., according to Fire Classification Standard BS EN 13501-1).

The sheathing board may be characterised as having a through-wall fire resistance of E160+ or above when tested according to Standard Test Methods BS EN 1363-1, EN1364-1.

The rigid building component may comprise a width, a length, and a height (i.e., thickness) each measured in an orthogonal direction to one another. The width may be at least 1000 mm, optionally around 1200 mm. The length may be at least 2000 mm, optionally around 2400 mm. The thickness may be at least 10 mm, optionally around 12.5 mm.

The wall may comprise two or more wall sections which are arranged at different angles to each other (e.g., two wall sections may intersect at a right angle to define a corner of the wall). The film may be arranged across two or more wall sections (e.g., the film may be arranged around a corner formed between two adjacent wall sections).

A corner of the wall may be formed between a first and a second wall section. The corner may be an exterior (e.g., outer) corner, i.e., the corner extending outwardly from the building. For example, an angle between a cavity facing surface of the inner walls of the respective wall sections may be greater than 180° (e.g., the cavity facing surface of the inner walls may be convex). In some cases, this angle may be about 90°. Alternatively, the corner may be an interior (e.g., inner) corner, i.e., the corner extending inwardly. For example, the angle between the cavity facing surfaces of the inner wall sections may be less than 180° (e.g., the cavity facing surface of the inner walls may be concave). In some cases, this angle may be about 270°.

At least one, or each, of the inner and outer walls may be constructed from a plurality of rigid building components. For example, the inner and/or outer wall(s) may comprise a framed section or panel, which, for example, may be made of wood or metal (e.g., steel). The framed section may be clad in one or more sheathing boards, in a manner that would be readily understood by the skilled person. According to an alternative exemplary arrangement, at least one of the inner and outer walls may be formed of a different type of building component to the other of the inner and outer walls. For example, the outer wall may be formed of bricks, or masonry units, which can be arranged to build up the wall in a conventional manner. Furthermore, it will be appreciated that the inner and/or outer walls may be formed of any number of building materials without departing form the scope of the present invention.

According to a third aspect, the invention provides a method of constructing a building cavity wall, the method comprises: arranging at least one rigid building component to define an internal wall of a building cavity wall; providing a fire-retardant film according to the first aspect; and arranging the film onto a cavity facing surface of the at least one rigid building component.

An adhesive coating may be applied to at least one planar surface of the film. The method may comprise contacting the surface of the film having the adhesive coating with a surface (e.g., a cavity facing surface) of the rigid building component.

The film may comprise a first release tape portion which covers a first section of the adhesive coating, and a second release tape portion which covers a second section of the adhesive coating. The first and second release tape portions may be divided along a longitudinal direction of the film. The method may comprise the following sequential method steps:

removing the first release tape portion from the film to expose the first section of the adhesive coating;
attaching the portion of the film which comprises the first adhesive coating section to the rigid building component;
removing the second release tape portion from the film to expose the second section of the adhesive coating; and
attaching the portion of the film which comprises the second adhesive coating section to the rigid building component.

The preceding summary is provided for purposes of summarising some examples to provide a basic understanding of aspects of the subject matter described herein. Accordingly, the above-described features should not be construed to narrow the scope or spirit of the subject matter described herein in any way. Moreover, the above and/or proceeding examples may be combined in any suitable combination to provide further examples, except where such a combination is clearly impermissible or expressly avoided. Other features, aspects, and advantages of the subject matter described herein will become apparent from the following text and the accompanying drawings.

BRIEF DESCRIPTION OF THE DRAWINGS

Aspects and embodiments of the invention will now be described by way of example with reference to the accompanying drawings in which:

Figure 1 is a perspective view of a fire-resistant film which is partially installed on an external surface of an inner wall of a building;

Figure 2 is a perspective view the wall shown in Fig. 1, in which the external surface of the inner wall is substantially covered in fire-resistant film;

Figure 3 is a perspective view of the inner wall shown in Fig. 1, wherein a lower part of the fire-resistant film is partially separated from the external surface of the inner wall;

Figure 4 is a perspective view of the fire-resistant film shown in Fig. 1, in isolation from the inner wall; and

Figures 5 and 6 are perspective views of the fire-resistant film shown in Fig. 1, the film is arranged in a testing rig for testing the reaction to fire of the film, according to Standard Testing Method BS EN ISO 11925-2.

DETAILED DESCRIPTION

Aspects and embodiments of the disclosure will now be discussed with reference to the accompanying figures. Further aspects and embodiments will be apparent to those skilled in the art.

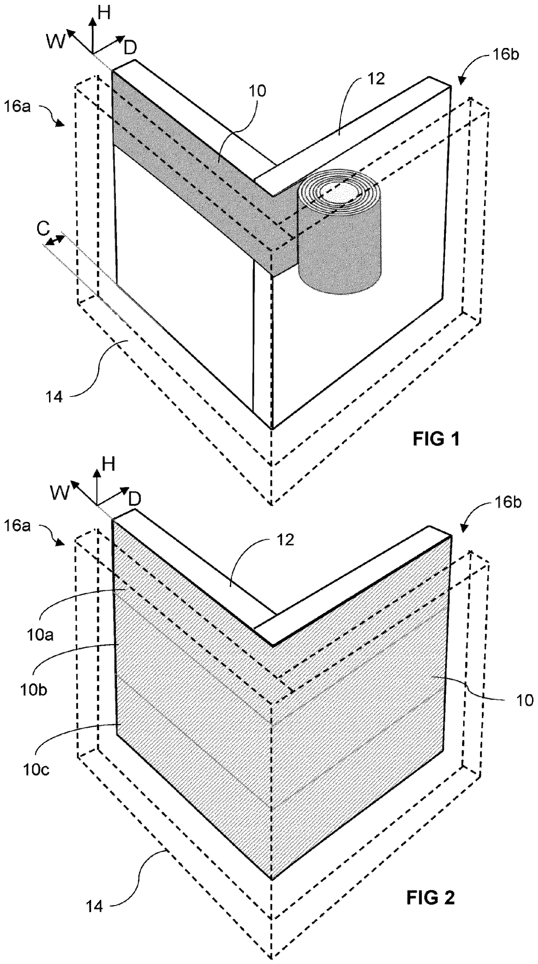

Figs. 1, 2, and 3 each show a fire-resistant film 10 according to an aspect of the present disclosure. The film 10 is arranged on a surface of a wall of a building. When exposed to thermal attack, the film 10 is capable of withstanding, and/or resisting, combustion which thereby reduces the spread of fire (e.g., along the wall), thereby allowing emergency services more time to control the outbreak of a fire. The film's fire-resistant properties are characterised by the satisfaction of two separate criteria, and with reference to a set of standard test methods, as explained in detail below. But first, an exemplary application of the film 10 will be described in order to provide context for the disclosure.

The walls in each of Figs. 1 to 3, define cavity walls of a building. Each of the cavity walls include an inner wall 12 and an outer wall 14 (i.e., the position of the outer wall 14 is depicted by the dashed outlines shown in Figs. 1 and 2). The inner and outer walls 12, 14 are spaced apart from each other to define a cavity C. As such, the film 10 according to this arrangement is positioned between the inner and outer walls, and arranged on a cavity facing surface of the inner wall 12.

The inner and outer walls 12, 14 each define a pair of wall sections 16a, 16b (e.g., a first wall section and a second wall section) which, in this example, are arranged at right angles to one another to define a corner of the building. Each of the inner and outer walls 12, 14, extend in a substantially vertical direction to define a height (H) of each wall section 16a, 16b. Each of the inner and outer walls also extend in a transverse, or width-wise, direction to define a width (W) of the wall sections 16a, 16b. Also, the inner and outer walls 12, 14 extend in a depth-wise direction (e.g., a direction which is substantially perpendicular to the width-wise and vertical directions) to define a depth (D) of each wall, and of the wall section 16a, 16b.

In this embodiment, the wall sections 16a, 16b intersect to define an exterior corner having a convex profile. The first wall section 16a is substantially perpendicular to the second wall section 16b to form a 90° angle therebetween (i.e., the angle between the cavity facing surfaces of the inner wall sections 16a, 16b is 270°). It will be readily apparent on the basis of this disclosure how the embodiment can be modified to be suitable for a concave profile corner (e.g., an interior corner).

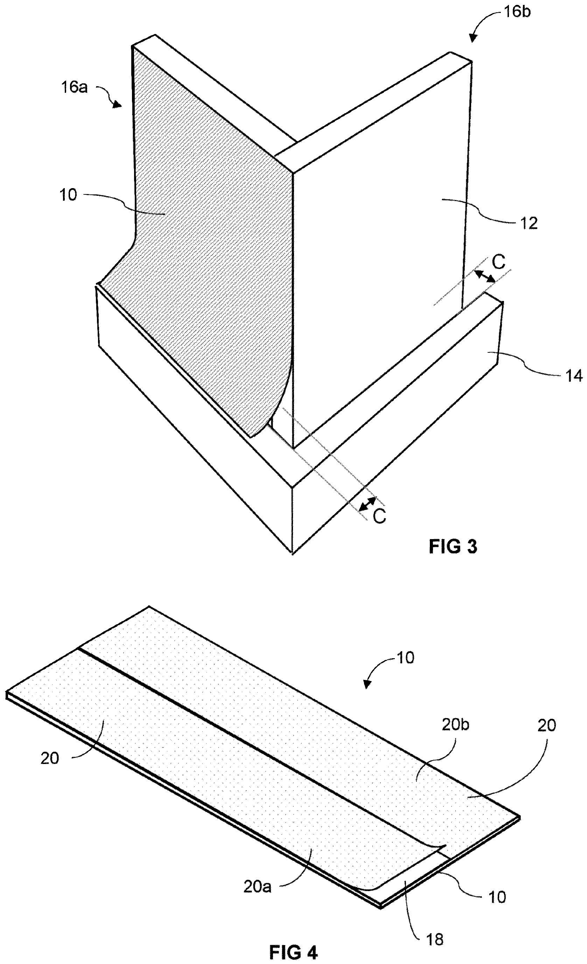

With reference to Fig. 2, the film 10 includes a plurality of film portions 10a, 10b, 10c which are arranged in a substantially horizontal direction across each wall section 16a, 16b (i.e., a longitudinal direction of each film portion is substantially aligned with the transverse direction of the inner wall 12). The film portions 10a-c are arranged vertically adjacent to one another on the inner wall 12. Also, each film portion 10a, 10b, 10c extends across both the first and second wall sections 16a, 16b. It will be appreciated, however, that the film 10 may comprise any number of portions arranged in different configurations without departing from the scope of the present disclosure. For example, the film 10 may be configured as a single film portion which covers the entire surface of at least one, or each, of the first and second inner walls 12 (e.g., such as the arrangement shown in Fig. 3).

In Fig. 3, the film 10 is arranged such that a lower portion is detached from the inner wall 12, and extends across the cavity C towards the outer wall 14. The film 10 can be arranged to lap through the outer wall 14 to define a drainage path for discharging condensed water vapour from within the wall cavity.

According to the arrangement shown in Fig. 3, at least part of the lower (i.e., detached) portion of the film 10 is separated from both the inner and outer walls 12, 14. This "detached" part of the film 40 is arranged such that each of its opposing planar surfaces are exposed to oxygen in the air. By contrast, only one of the opposing planar surfaces of the film's upper portion is exposed to air (i.e., the surface which is not directly attached to the inner wall 12). It is a key aspect of the present disclosure that the film 10 is configured to resist combustion when (a) the film 10 is attached to a rigid building component (e.g., such as when the upper portion of the film 10 is attached to the inner wall 12, as shown in Fig. 3) and/or (b) when the film 10 is spaced apart from a rigid building component (e.g., such as when the lower portion is detached from the inner and outer walls 12, 14). This characteristic of the film 10 advantageously enhances the fire resistance properties of both the film 10 and also the cavity wall in which the film is installed.

The film 10 has a laminate construction which includes a first layer formed of a non-woven polyester material, which gives the film advantageous mechanical properties and/or vapour permeability. The film 10 further includes a second layer which comprises polyurethane, and is configured to provide the film with advantageous properties which allow it to resist fire and water penetration. An adhesive coating 18 is applied to a planar surface of the first layer of the film 10 (e.g., so that the first layer is interposed between the second layer and the adhesive coating).

The adhesive coating 18 allows the film to be attached (e.g., bonded) to a rigid building component (such as the inner wall 12), which avoids the need to use separate attachment elements (e.g., adhesive tape, or fastenings). The adhesive coating 18 comprises an acrylic polymeric material with one or more flame retardant compounds to reduce the spread of fire at the interface between the film 10 and any surface to which the film is attached.

Prior to use, the adhesive coating 18 is covered with a release layer 20 (or tape) which is provided to protect the adhesive coating. The release layer 20 can be removed from the adhesive coating 18 immediately before the film 10 is installed on the inner wall 12. The release layer 18 is has a laminate construction which comprises a first layer which is formed of a silicone material, and a second layer which is formed of polypropylene.

According to an exemplary arrangement of the film 10, the release layer 10 includes a pair of separate release layer portions 20a, 20b (e.g., a first release layer portion 20a and a second release layer portion 20b), which are configured to cover respective first and second portions of the adhesive coating 18. Each of the first and second release layer portions 20a, 20b cover half the adhesive coating 18 (e.g., they each extend, in a lateral direction, around halfway across the width of the film 10). The first and second release layer portions 20a, 20b can be removed, independently, from one another, to expose the respective portions of the underlying adhesive coating 18.

According to an exemplary method for installing the film 10, the first release layer portion 20a is removed, initially, so that the first portion of adhesive coated film can be mounted to the wall 12. Then, once the first adhesive portion is secured in position, the second release layer portion 20b is removed so that the second adhesive covered portion of the film 10 can be attached to the wall 12. By retaining the second release layer portion on the film whilst the first adhesive portion is attached to the wall, the installer of the film is able to handle both surfaces of the second film portion (i.e., without their hands becoming attached to the adhesive and/or without the film sticking to itself).

This is particularly advantageous when the film is installed at an elevated position on a building (e.g., when the installer is positioned on an elevated platform or scaffolding), and so is exposed to high winds. The first and second release layers 20a, 20b allow the installer to manoeuvre the film more conveniently into the correct position.

The film 10 can be stored and/or transported as a roll (as shown, for example, in Fig. 1). The roll is formed by rolling up the film 10 along a longitudinal direction (i.e., so that the longitudinal direction of the film is substantially perpendicular to a principal axis of the roll, and the width of the roll is substantially the same as the width of the film 10). The first and second release layer portions 20a, 20b are divided (e.g., equally) along the longitudinal direction of the film 10. The longitudinal arrangement of the release layer portions means that each section of film 10 (i.e., which may be provided by unrolling and then cutting across the film in a lateral direction) is provided with first and second release portions 20a, 20b, which means that each section of film 10 can be conveniently mounted in position in the manner described above.

With reference to Fig. 1, the film 10 is arranged such that the adhesive coating 18 positioned on the outer surface of the roll. In this way, a first exposed portion of the outer surface of the film 10 (e.g., which comprises the adhesive coating 18) can be attached initially onto the wall 12. Then, as further portions of the film 10 are unrolled, they can be immediately attached to the wall in a continuous manner. Alternatively, the film 10 may be configured so that the adhesive coating 18 is arranged on an inner (i.e., concealed) surface of the roll. The adhesive coating 18 is then exposed gradually as the film 10 is unrolled. In this way, the adhesive coating can be protected from damage, whilst the film 10 is not in use.

The film 10 has a length of around 50 m, a width of around 1.5 m, and a thickness (e.g., measured in a direction which is perpendicular to the length and width directions) of between 0.3 mm and 0.4 mm.

The inner and outer walls 12, 14 are constructed from a plurality of rigid building components. Each of the inner and outer wall 12, 14 include a framed section made of wood or metal (e.g., steel). The framed section is clad in a plurality of sheathing boards using fasteners. The sheathing boards are comprised of a cementitious material (e.g., to define a cement board), such as Cortex 0270 Class A1 Score'N'Snap Board. It will be appreciated, however, that the inner and outer walls 12, 14 may be formed of alternative building materials (e.g., masonry building blocks, bricks, and/or sheathing boards made of at least one of gypsum, calcium silicate and fibreglass) without departing form the scope of the present disclosure.

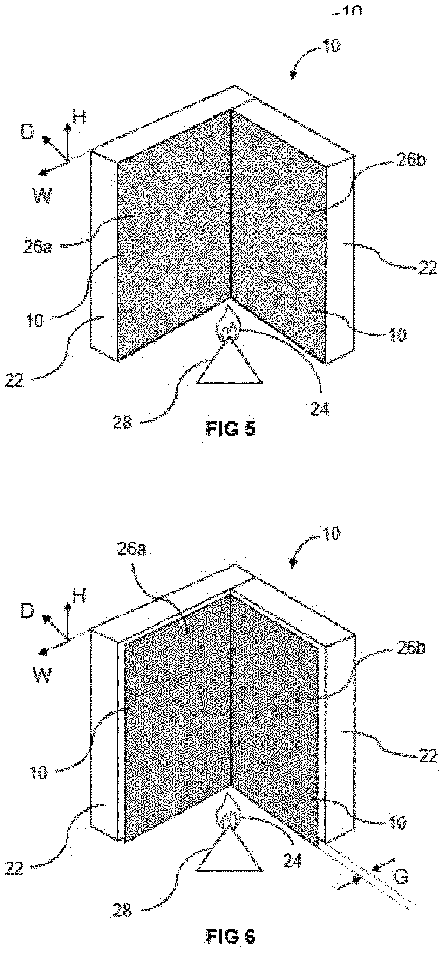

As described above, the film 10 of the present disclosure is characterised by satisfying a first criterion and/or a second criterion. Each criterion is defined in relation to a specific test, which will now be described with reference to Figs. 5 and 6.

The first criterion requires that the film 10 is attached to a cement board building component 22 so that a planar surface of the film 10 is substantially covered by the cement board 22, as shown in Fig. 5. By contrast, testing for the second criterion requires that the film 10 is spaced apart from the cement board 22 according to Standard Method BS EN 13238:2010 (which specifies the conditioning procedures for test specimens to be tested according to the European standard reaction to fire test BS EN 13501-1). This means that both opposed planar surfaces of the film 10 are substantially exposed to air, as shown in the arrangement of Fig. 6. IN each of the first and second criteria, the cement boards 22 are configured with a thickness D of 12 mm, as shown in Fig. 6.

Each of the first and second criteria require that, when the film 10 is subjected to a reaction to fire test, the film 10 achieves a minimum set of fire classification ratings, as will be explained in more detail below. Each of the first and second criteria require that the film 10 and the cement board 22 are conditioned (i.e., prepared for the reaction to fire test) in accordance with Standard Method BS EN 13823:2020. It will be appreciated that BS EN 13823:2020 specifies a single burn test (SBI) method for determining the reaction to fire performance of a substantially flat construction element when it is exposed to thermal attack from a single flame.

Once the film specimens are prepared, they are tested according to BS EN ISO 11925-2:2020, which describes a standard method of testing vertically oriented test specimens under thermal attack from a single flame (e.g., a single flame ignitability test (SFI)).

A method of testing the film 10 will now be described with reference to Figs. 5 and 6, which depict a testing rig for testing the film 10, according to Standard Testing Method BS EN ISO 11925-2:2020.

The plurality of film specimens 10 are arranged (e.g., orientated/positioned) to define two vertical wing portions 26a, 26b which form a right-angled corner (i.e., the films specimens 10 are arranged on an inward facing surface of the cement boards 22). The film specimens 10 are exposed to a flame 24 from a burner 28 which is placed at the bottom of the corner formed between the two vertical wing portions 26a, 26b (i.e., so that the burner 28 is positioned between the two wing portions). The flames are obtained by the combustion of propane which is injected through a sandbox positioned immediately adjacent to the burner 28.

According to the first criteria, the film specimens 10 are adhered to the cement board building component, as shown in Fig. 5, whereas according to the second criteria the film specimens 10 are spaced apart from the cement board building component by a gap G of 25 mm, as shown in Fig. 6.

During testing, the testing rigs shown in Fig. 5 and 6 are placed in a testing chamber (not shown), which is connected to a gas exhaust system capable of removing heat and gases from the test site. The exhaust system is operable, throughout the test, with an exhaust volume flow rate of $0.6 \pm 0.05$ m$^3$s$^{-1}$.

Each of the vertical wing portions 26a, 26b are mounted to a specimen holder (not shown), which is formed of a fire-resistant material. The specimen holder includes two rectangular supporting frames to which the respective vertical wing portions 26a, 26b are attached. Each wing portion is configured to match the width and height dimension of the corresponding supporting frame of the specimen holder. An uppermost and substantially horizontal edge of the film specimen 10 is attached to an upper end of the holder. Two opposing and substantially vertical (i.e., lateral) sides of the film specimen are attached to corresponding lateral side members of the holder. Also, an exposed, lowermost, and substantially horizontal edge of the film specimen 10 is spaced vertically below a lower member of the holder, by a distance of 30 mm.

The burner 28 is angled at an angle of 45° to a substantially vertical join between the two vertical wing portions 26a, 26b. The flow of propane to the burner 28 is configured so that the flame height is around 20 mm above the end of the burner, and so that the burner outputs heat at $30.7 \pm 2.0$ kW. The test specimen is subjected to thermal attack from the burner 28 over a continuous period of around 20 minutes.

According to each of the first and second criteria, the film specimens 10 must achieve a set of classification rating, namely: (a) a reaction to fire rating, (b) a smoke generation rating, and (c) a flaming droplet rating. The ratings (a), (b), and (c) are determined by measuring a set of parameters including the heat release rate (HRR), and the smoke production rate (SPR).

The heat release rate is measured by an oxygen calorimeter arranged in the gas exhaust system of the testing rig. The smoke production rate is measured by a light attenuation instrument mounted in the gas exhaust system, typically arranged adjacent to the calorimeter.

From the measured parameters, a series of classification indices are calculated, including a fire growth rate index (FIGRA), a lateral flame spread (LFS), a total heat release (THR$_{600s}$), a smoke growth rate index (SMOGRA) and a total smoke production (TSP$_{600s}$).

The FIGRA and SMOGRA indices are calculated as follows:

$$FIGRA = 1000 \cdot max\left(\frac{HRR_{av}(t)}{t}\right)$$

$$SMOGRA = 1000 \cdot max\left(\frac{SPR_{av}(t)}{t}\right)$$

where $HRR_{av}$ is the heat release rate (measured in kW) averaged over 30 s, $SPR_{av}$ is the smoke production rate (measured in $m^2s^{-1}$) averaged over 60 s, and t (measured in s) is the time elapsed following the start of the test (e.g., the ignition of the burner). The units of FIGRA and SMOGRA are $Ws^{-1}$ and $m^2s^{-2}$, respectively. It will be appreciated that different heat release related threshold values for the FIGRA calculation are used in different classes to obtain $FIGRA_{0,2MJ}$ and $FIGRA_{0,4MJ}$ values.

The $THR_{600s}$ and $TSP_{600s}$ values are calculated over the first 600 seconds of the test as follows:

$$THR_{600s} = \frac{1}{1000}\sum_{0s}^{600s} HRR(t) \cdot \Delta t$$

$$TSP_{600s} = \sum_{0s}^{600s} SPR(t) \cdot \Delta t$$

where HRR(t) is the heat release rate as a function of time, and SPR(t) is the smoke production rate as a function of time, and $\Delta t$ is the data acquisition interval (measured in s) of the measurement. The units of $THR_{600s}$ and $TSP_{600s}$ are MJ and $m^2$, respectively.

In additional to the quantitatively measured parameters, a series of visual observations are also made of the film specimens 10 during the test, in order to identify flame spread and the subsequent falling of flaming droplets or particles. Specifically, filter paper is placed beneath the specimen holder to catch any flaming droplets from the vertical film specimens 10. The lateral flame spread rating comprises a measure of whether the flame reaches the outer (i.e., lateral) edge of a wing 26a, 26b of the film specimen at a height between 500 mm and 1000 mm (e.g., measured from the base of the film specimen).

The results of the reaction to fire test according to the first and second criterion are presented below in Tables 1 and 2, respectively.

Table 1 - First Criterion

| Classification indices | Specimen | | | Mean | Class |
|---|---|---|---|---|---|
| | 1 | 2 | 3 | | |
| $FIGRA_{0.2MJ}$ ($Ws^{-1}$) | 8.1 | 8.4 | 8.0 | 8.2 | B |
| $FIGRA_{0.4MJ}$ ($WS^{-1}$) | 6.3 | 8.4 | 8.0 | 7.6 | |
| THR600s (MJ) | 0.7 | 0.3 | 1.1 | 0.7 | |
| LFS to edge (yes or no) | No | No | No | No | |
| SMOGRA ($m^2s^{-2}$) | 15.0 | 1.5 | 0.0 | 5.5 | S1 |
| $TSP_{600s}$ ($m^2$) | 36.8 | 37.4 | 42.3 | 38.8 | |
| FDP flaming $\leq$10 s (yes or no) | No | No | No | No | d0 |
| FDP flaming >10 s (yes or no) | No | No | No | No | |

Table 2 - Second Criterion

| Classification indices | Specimen | | | Mean | Class |
|---|---|---|---|---|---|
| | 1 | 2 | 3 | | |
| FIGRA0.2MJ (Ws-1) | 25.9 | 20.1 | 26.2 | 24.1 | B |
| FIGRA0.4MJ (Ws-1) | 20.4 | 8.5 | 5.5 | 11.5 | |
| THR600s (MJ) | 1.7 | 1.1 | 1.3 | 1.4 | |
| LFS to edge (yes or no) | No | No | No | No | |
| SMOGRA (m2s-2) | 0.0 | 0.0 | 0.0 | 0.0 | S1 |
| TSP600s (m2) | 38.3 | 41.2 | 43.7 | 41.1 | |
| FDP flaming $\leq$ 10 s (yes or no) | No | No | No | No | d0 |
| FDP flaming >10 s (yes or no) | No | No | No | No | |

A reaction to fire rating of B is achieved if the $FIGRA_{0.2MJ}$ value is up to 120 $Ws^{-1}$, if the $THR_{600s}$ value is up to 7.5 MJ, and if the lateral flame spread is observed to not reach the edge of the specimen. A smoke generation rating of S3 is achieved if the SMOGRA value is more than 180 $m^2s^{-2}$ and the $TSP_{600s}$ is more than 200 $m^2$. A smoke generation rating of S2 corresponds to a SMOGRA value of up to 180 $m^2s^{-2}$ and a $TSP_{600s}$ value of up to 200 $m^2$. A smoke generation rating of S1 corresponds to a SMOGRA value of up to 30 $m^2s^{-2}$ and a $TSP_{600s}$ value of up to 50 $m^2$. A flaming droplets rating of d0 is achieved if no flaming droplets/particles are observed within 600 seconds of the film specimen being exposed to thermal attack from the flame.

As outlined in Tables 1 and 2, the three film specimens 10 each achieve a reaction to fire rating of B, a smoke generation rating of S1, and a flaming droplets rating of d0, when configured according to each of the first and second criteria. As a result, each of the film specimens 10 are configured so that (under the designated test conditions) they do not produce emissions with high volume intensity, nor do they significantly contribute to the propagation of fire, and nor do they produce burning droplets.

In exemplary arrangements, the film 10 of the present disclosure is further defined with reference to an ignitability test according to BS EN ISO 11925-2:2020. The ignitability test involves conditioning the film specimens 10 as described above in accordance with BS EN 13238:2010.

The burner 28 and flame are configured so that the flame impinges directly on the film specimen 10 at the join between the two vertical wing portions 26a, 26b, and at a position which is around 40 mm above the lower edge of the film specimen 10. The flame height is set at 20 mm above the base of the film specimen 10 and a marker is placed on the film 10 at a position which is around 150 mm above the end of the burner.

During the test, the flame is controlled to impinge on the specimen for 30 seconds, and the time it takes for the flame tip to reach the marker is recorded (i.e., the flame spread (Fs)). Further observations are made during the test, including whether ignition of the film occurs, whether flaming debris is produced, and if ignition of the filter paper occurs.

Each of the film specimens 10 when tested according to the ignitability test were observed not to ignite within the monitored 30 second period of the test. As such, it was determined that the film specimens 10 have a reaction to fire rating of at least E, as also confirmed by the reaction to fire test of the first and second criteria (i.e., which determined that the film's reaction to fire rating is at least B).

The film 10 can be further characterised by satisfying a number of other criteria, each relating to physical properties of the film 10.

A third criterion is satisfied if the film 10 is determined to have a particular range of tensile strengths, when tested according to Standard Test Method BS EN 12311-1:2000. Testing the tensile strength of the film 10 requires that a plurality of film specimens are pre-conditioned for a minimum of 20 hours at a temperature of 23 $\pm$ 2°C, and at a relative humidity in the range of 30 % to 70 %.

Each film specimen has a width of 100 mm and a length of at least 200 mm (e.g., so that the film specimen can be engaged between the jaws of the testing apparatus). Outer lateral sections of each film specimen (i.e., arranged along the longitudinal edges of the film specimen) are folded inwards (i.e., towards a longitudinal central line of the specimen) so that they meet in the middle of the specimen but do not overlap. The folded lateral sections are typically around 25 mm wide.

The test commences by mounting the film specimen in the testing machine and applying a pre-tension force of 5 N. The test proceeds at a constant rate of extension of 100 mm per minute until failure of the specimen. An exemplary testing apparatus suitable for carrying out the test according to the third criterion includes the Testometric C.R.E. machine. The results of the tensile test according to the third criterion are presented below in Table 3.

Table 3 - Tensile Strength and Elongation

| Mechanical Property | | Specimen | | | | | Mean | S.D. |
|---|---|---|---|---|---|---|---|---|
| | | 1 | 2 | 3 | 4 | 5 | | |
| MD | Tensile Strength (N/50mm) | 252.9 | 238.1 | 247.2 | 266.0 | 268.2 | 255 | 12.7 |
| | Elongation at maximum force (%) | 21.58 | 22.53 | 24.91 | 26.84 | 26.84 | 23 | 3.59 |
| CD | Tensile Strength (N/50mm) | 178.2 | 193.0 | 185.3 | 174.4 | 167.2 | 180 | 9.9 |
| | Elongation at maximum force (%) | 24.02 | 26.48 | 26.05 | 23.27 | 22.54 | 24 | 1.72 |

The third criterion is achieved for a film 10 which has a tensile strength of at least 230 N, per 50 mm, when measured in the lengthways direction of the roll (e.g., a longitudinal tensile strength), and/or a tensile strength of at least 160 N, per 50 mm, when measured in a widthways direction of the roll (e.g., a transverse tensile strength). As outlined in Table 3, each of the test specimens 1-5 satisfy these requirements. Consequently, the film 10 is strong enough to be unrolled and then arranged on an exposed surface of a building. Also, the film 10 is resistant to damage during subsequent construction of the building.

A fourth criterion requires that the film 10 has a longitudinal tear resistance of 100 N (i.e., when measured in the lengthways direction of the roll) and a transverse tear resistance of 106 N (i.e., when measured in the widthways direction of the roll), when measured in accordance with Standard Test Method BS EN 12310-1:2000.

A fifth criterion requires that the film 10 has a water vapour permeability (Sd) of less than 0.12 m when tested according to Standard Test Method BS EN ISO 12572:2016. This means that, when installed in the walls of a building, the film 10 is configured to allow water vapour to escape from the building to prevent the damp which can lead to the formation of mould.

A sixth criterion requires that the film 10 is configured with an air permeability of less than 0.05 $m^3m^{-2}h^{-1}$, when tested according to Standard Test Method BS EN 12114:2000 (modified according to BS EN 1026:2016). The film 10 configured to satisfy the fourth criteria is capable of preventing air flow (e.g., drafts) through the walls of the building, which thereby improves the thermal performance of the building. In an exemplary arrangement, testing of the film 10 according to the sixth criterion involves providing a rectangular film specimen having a width of 1.3 m and a length of 1.3 m which is mounted to a rectangular frame to form an exposed (i.e., central) test area of 1.23 $m^2$. During the test, the film is exposed to a relative pressure differential of up to 100 Pa.

A seventh criterion is satisfied by a film 10 which is configured to resist water penetration for at least 2 hours, when tested according to Standard Method BS EN 1928:2000. Advantageously, the film 10 is therefore capable of reducing water leaks (e.g., due to rain) into the building. The seventh criterion requires that the film 10 is conditioned prior to testing for a minimum of 6 hours at 23 $\pm$ 5°C. The testing procedure involves providing a plurality of film specimens, each forming a circular cut-out of film having a diameter of 150 mm. Each film specimen is arranged onto a separate piece of filter paper which is used to indicate water passage through the film. A cover plate is placed over each film specimen to prevent the film material lifting from the filter paper during the test. Each specimen is then subjected to a hydrostatic head of 200 mm for a period of 2 hours. The test is undertaken in an atmosphere of 65 $\pm$ 5% relative humidity, at a temperature of 20 $\pm$ 2°C, and with the film 10 being subjected to a water pressure differential of 2 kPa. After which, the specimens are inspected for any discolouration of the filter paper. The seventh criterion is satisfied if no discolouration of the filter paper is observed.

According to each of the first to seventh criteria, the film is configured to satisfy Standard BS EN 13859-2:2014, which specifies the characteristics (e.g., length, width, straightness, and mass per unit area) of flexible underlays which are arranged on (or within) a building (e.g., within a building cavity wall).

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments can be made without departing from the spirit and scope of the invention.

In the drawings, the thickness of layers, films, elements etc., are exaggerated for clarity. Furthermore, it will be understood that when an element such as a layer, film, region, or substrate is referred to as being "on" another element, it can be directly on the other element or intervening elements may also be present. In contrast, when an element is referred to as being "directly on" another element, there are no intervening elements present.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

Unless otherwise explicitly stated as incompatible, or the physics or otherwise of the embodiments, examples, or claims prevent such a combination, the features of examples disclosed herein, and of the claims, may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g., numbering) of example(s), embodiment(s), or dependency of claim(s). Moreover, this also applies to the phrase "in one embodiment," "according to an embodiment," and the like, which are merely a stylistic form of wording and are not to be construed as limiting the following features to a separate embodiment to all other instances of the same or similar wording. This is to say, a reference to 'an,' 'one,' or 'some' embodiment(s) may be a reference to any one or more, and/or all embodiments, or combination(s) thereof, disclosed. Also, similarly, the reference to "the" embodiment may not be limited to the immediately preceding embodiment. Further, all references to one or more embodiments or examples are to be construed as non-limiting to the claims.

**Claims**

1. A fire-retardant film for arranging onto a cavity facing surface of an internal wall of a building cavity wall, wherein the film comprises a polymeric material, and is configured to resist water and/or wind penetration, and is substantially water vapour permeable;

   wherein the film is **characterised by** satisfying a first criterion and/or a second criterion, and wherein testing for the first criterion requires that the film is attached to a cement board building component so that a planar surface of the film is substantially covered by the cement board building component, and wherein testing for the second criterion requires that the film is spaced apart from the cement board building component according to Standard Method BS EN 13238:2010 such that both opposed planar surfaces of the film are substantially exposed to air;

   wherein the first and second criteria each require that the film and the cement board building component are conditioned according to Standard Method BS EN 13823:2020, and that the film has a reaction to fire rating of B or above, a smoke generation rating of S3 or above, and a flaming droplets rating of d0, when the film is exposed to fire using Standard Test Method BS EN 11925-2:2020.

2. A fire-retardant film according to claim 1, wherein the film comprises a laminate construction comprising at least one layer which is formed of the polymeric material.

3. A fire-retardant film according to claim 2, wherein a first layer of the laminate construction is formed of a polyester material, optionally a non-woven polyester, and optionally wherein a second layer of the laminate construction is formed of a thermoplastic polyurethane material.

4. A fire-retardant film according to any one of the preceding claims, wherein an adhesive coating is applied to at least one surface of the film,

   and optionally wherein the adhesive coating comprises an acrylic polymeric material; and optionally wherein the adhesive coating comprises one or more flame retardant compounds;

   and optionally wherein the film comprises a removable release tape which covers at least a portion of the adhesive coating, optionally wherein the release tape comprises at least one of silicone and polypropylene, further optionally the release tape comprises a substantially silicone film coated in polypropylene.

5. A fire-retardant film according to claim 4, wherein the film is arranged on a roll and the release tape comprises a first release tape portion and a second release tape portion, wherein the first release tape portion covers a first section of the adhesive coating, and the second release tape portion covers a second section of the adhesive coating;

wherein the first and second release tape portions are divided along a longitudinal direction of the film which is substantially perpendicular to a principal axis of the roll;
wherein optionally the first section of the adhesive coating covers half the film's surface.

6. A fire-retardant film according to any one of the preceding claims, wherein the film is configured lengthways in a roll, and wherein the roll of film has a width of between 1 m and 2 m, optionally around 1.5 m, and optionally wherein the film has a thickness of less than 0.5 mm.

7. A fire-retardant film according to any one of the preceding claims, wherein the film is configured lengthways in a roll and wherein the film is configured with a tensile strength, when tested according to Standard Test Method BS EN 12311-1:2000, of 240N per 50mm in the lengthways direction, and/or 180N per 50mm in a widthways direction of the roll.

8. A fire-retardant film according to any one of the preceding claims, wherein the film is configured lengthways in a roll and wherein the film is configured with a tear resistance, when measured according to Standard Test Method BS EN 12310-1:2000, of 100 N in the lengthways direction, and 106 N in a widthways direction of the roll.

9. A fire-retardant film according to any one of the preceding claims, wherein the film is configured with a water vapour permeability (Sd) of less than 0.12m, optionally less than 0.4m, when tested according to Standard Test Method BS EN ISO 12572:2016.

10. A fire-retardant film according to any one of the preceding claims, wherein the film is configured with an air permeation/thermal performance of less than 0.05 $m^3m^{-2}h^{-1}$, when tested according to Standard Test Method BS EN 12114:2000, optionally tested at a relative pressure differential of 100 pa.

11. A fire-retardant film according to any one of the preceding claims, wherein the film is configured to resist water penetration for up to 2 hours, when tested according to BS EN 1928:2000, optionally wherein the film is tested with a water pressure differential of 2kPa, further optionally, the film conforms to Standard EN 13859-2.

12. A building system comprising at least one rigid building component for a building cavity wall, and a fire-retardant film according to any one of claims 1 to 11;
wherein the rigid building component is configured to define at least part of an inner wall of the building cavity wall, and the film is arranged on a cavity facing surface of the inner wall, wherein optionally the rigid building component defines a block or a board.

13. A building system according to claim 12, wherein the rigid building component is a sheathing board which is comprised of at least one of a cementitious material, gypsum, calcium silicate and fibreglass.

14. A method of constructing a building cavity wall, the method comprises:

arranging at least one rigid building component to define an internal wall of a building cavity wall;
providing a fire-retardant film according to any one of claims 1 to 11; and
arranging the film onto a cavity facing surface of the at least one rigid building component;
and optionally wherein an adhesive coating is applied to a planar surface of the film, the method comprises contacting the surface of the film having the adhesive coating with the cavity facing surface of the rigid building component.

15. A method according to claim 14, wherein the film comprises a first release tape portion which covers a first section of the adhesive coating, and a second release tape portion which covers a second section of the adhesive coating, wherein the first and second release tape portions are divided along a longitudinal direction of the film; the method comprises the following sequential method steps:

removing the first release tape portion from the film to expose the first section of the adhesive coating;
attaching the portion of the film which comprises the first adhesive coating section to the rigid building component;
removing the second release tape portion from the film to expose the second section of the adhesive coating; and

attaching the portion of the film which comprises the second adhesive coating section to the rigid building component.

FIG 1

FIG 2

**FIG 3**

**FIG 4**

**FIG 5**

**FIG 6**

Europäisches
Patentamt

European
Patent Office

Office européen
des brevets

# EUROPEAN SEARCH REPORT

**Application Number**

EP 24 17 0064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/316541 A1 (BACHON THOMAS [DE]) 14 October 2021 (2021-10-14) | 1-11 | INV. E04B1/62 B32B27/08 E04B1/94 |
| Y | * paragraphs [0003], [0007], [0009], [0023], [0031], [0039] - [0046]; figures 1-7 * | 12-15 | |
| X | US 2018/237662 A1 (WIDENBRANT MARTIN J [US] ET AL) 23 August 2018 (2018-08-23) | 1-11 | |
| Y | * paragraphs [0002], [0011], [0060], [0080], [0113], [0012] - [0135]; figures 1-10 * | 12-15 | |
| Y | US 2004/103608 A1 (LIONEL BORENSTEIN [CA]) 3 June 2004 (2004-06-03) * paragraph [0061] - paragraph [0071]; figures 1,2 * | 12-15 | |

**TECHNICAL FIELDS SEARCHED (IPC)**

E04B
B32B

The present search report has been drawn up for all claims

| Place of search | Date of completion of the search | Examiner |
|---|---|---|
| The Hague | 29 August 2024 | Melhem, Charbel |

**ANNEX TO THE EUROPEAN SEARCH REPORT
ON EUROPEAN PATENT APPLICATION NO.**

EP 24 17 0064

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2024

| Patent document cited in search report | | Publication date | Patent family member(s) | | Publication date |
|---|---|---|---|---|---|
| US 2021316541 | A1 | 14-10-2021 | CA | 3115398 A1 | 07-05-2020 |
| | | | DE | 102018008585 A1 | 30-04-2020 |
| | | | EP | 3668710 A1 | 24-06-2020 |
| | | | PL | 3668710 T3 | 30-05-2022 |
| | | | US | 2021316541 A1 | 14-10-2021 |
| | | | WO | 2020088853 A1 | 07-05-2020 |
| US 2018237662 | A1 | 23-08-2018 | CA | 2995965 A1 | 23-02-2017 |
| | | | CA | 2995982 A1 | 23-02-2017 |
| | | | CN | 107922797 A | 17-04-2018 |
| | | | CN | 107923176 A | 17-04-2018 |
| | | | EP | 3337867 A1 | 27-06-2018 |
| | | | EP | 3337935 A1 | 27-06-2018 |
| | | | KR | 20180041705 A | 24-04-2018 |
| | | | KR | 20180042298 A | 25-04-2018 |
| | | | US | 2018237662 A1 | 23-08-2018 |
| | | | US | 2018245332 A1 | 30-08-2018 |
| | | | WO | 2017031275 A1 | 23-02-2017 |
| | | | WO | 2017031359 A1 | 23-02-2017 |
| US 2004103608 | A1 | 03-06-2004 | CA | 2413550 A1 | 03-06-2004 |
| | | | US | 2004103608 A1 | 03-06-2004 |

EPO FORM P0459

For more details about this annex : see Official Journal of the European Patent Office, No. 12/82